# EUROPEAN PATENT SPECIFICATION

(11) **EP 0 844 929 B1**
(45) Date of publication and mention of the grant of the patent: **10.04.2002**
(21) Application number: 95937299.6
(22) Date of filing: 21.07.1995
(51) Int. Cl.: B32B 31/04, B32B 31/08, E04C 2/22

(54) **REINFORCED FOAM CORES**
VERSTäRKTER SCHAUMSTOFFKERN
AMES DE MOUSSE RENFORCEES

(43) Date of publication of application: 03.06.1998
(73) Proprietor: Webcore Technologies Inc., Centerville, OH 45459 (US)
(72) Inventor: DAY, Stephen, W., Dayton, OH 45458 (US)
(74) Representative: Warren, Anthony Robert
(86) International application number: US9509161
(87) International publication number: WO9703828

(56) References cited:
- DE-A- 1 949 209
- DE-A- 1 951 310
- FR-A- 2 179 006
- US-A- 4 262 052
- US-A- 5 060 291

## Description

Sandwich panels are used in a wide variety of applications requiring structural and/or thermal insulation properties. These applications include structural and non-structural uses in refrigerated and non-refrigerated buildings, boats, aircraft, rapid transit and recreational vehicles, enclosed trailers and many others. Structural sandwich panels are composite structures formed by bonding two generally thin facings or skins to a relatively thick core material. The skins, which are normally dense and strong, resist compression and tension, while the core, which is normally of relatively weak and low density material, serves to separate the skins, stabilize them against buckling and resist shear loads.

Two common materials used as cores for sandwich panels are rigid expanded plastic foams and honeycomb materials. Honeycomb core usually comprises a thin sheet material, such as paper or aluminum foil, which is formed into a variety of cellular configurations. Expanded plastic foam cores usually provide much higher levels of thermal insulation than honeycomb, but honeycomb cores are normally substantially stronger than insulating foam cores of comparable density.

Various methods of introducing insulating foams into the cells of honeycomb have been used for the purpose of filling the voids or adding higher levels of thermal insulation to structurally adequate honeycomb core. These include such approaches as applying foaming chemicals to the honeycomb cells, and pressing slabs of plastic foam into the cells. However, these processes are difficult to perform in thick core sections, limit the types of foams which can be used to fill the cells of the honeycomb uniformly, or require large capital investment in machinery. As a result, such composite cores have enjoyed little use in most sandwich panel applications, and many honeycomb core products are consequently deficient in insulation and subject to migration of water into the core.

Plastic foam core sandwich panels with skins of metal, wood, fiberglass reinforced plastics and similar durable materials are widely manufactured by three basic processes. In one process, liquid chemicals, commonly of polyisocyanurate formulation, are injected between the skins, after which they react and expand to form a rigid foam which bonds itself to the skins to form the sandwich panel. A second method of producing sandwich panels is by adhesive lamination wherein preformed panel skins are bonded by adhesive to cores of rigid foam boards or slabs which have been cut from expanded foam billets. In the third method, uncured resins and reinforcing materials are applied to the surfaces of such foam boards, or resins are introduced and into closed or vacuum bagged molds containing the core and skin reinforcements and subsequently cured to form rigid skins.

Sandwich panel laminators use a wide variety of these preformed cores, including polyurethane, polyisocyanurate, extruded polystyrene, expanded polystyrene, polyvinylchloride and foam glass. The use of common low density 32.04 Kg/m³ (2.0 pounds per cubic foot) polyurethane and polyisocyanurate foams in structural lamination processes is severely restricted in spite of large demand for sandwich panels containing such cores. The cost of such core materials in the form of boards or slabs cut from billets is substantially higher than the cost of chemicals used in foam-in-place processes, a differential of typically two to three times. In addition, since most polyurethane and polyisocyanurate billet stock is manufactured for applications other than sandwich panels, the stock is not usually formulated with physical properties designed primarily for structural sandwich panel use. The best foam stocks having appropriate properties for such sandwich panels are produced by very few suppliers and in limited geographic areas.

Polyisocyanurate foam is also produced as board stock with attached facings for use as insulation in roofs and other non-structural construction applications. This foam material satisfies common fire performance specifications, is manufactured in large quantities in numerous locations, and is sold as a relatively low priced commodity. In spite of its compelling cost advantages and the modest structural requirements of most construction panel cores, such insulation has seen very limited use as core material for sandwich panels. Both thickness and flatness of the roof insulation boards have unacceptably wide tolerances for most sandwich panel applications. While planing or sanding the facings eliminates this problem, it also removes the skin part of the foam board having the highest density and strength. Even more serious, available polyisocyanurate foam formulations are not consistently tough enough, and their friability, brittleness and low shear strength can result in serious structural failures. These show up as delamination or foam shear under conditions of structural loading, thermal stress or surface impact.

Plastic foam cores for more structurally demanding sandwich panel applications, such as the hulls of boats, are commonly made of linear or cross-linked polyvinyl chloride (PVC) formulations, in densities of from 32.04 to 256.30 Kg/m³ (2.0 pounds per cubic foot). The high cost of these materials per unit length of board (i.e. per board foot has limited their use in such major medium to high performance applications as highway trailers and recreational vehicles. A further drawback of the PVC foams and of other thermoplastic foams, such as polystyrene, is serious degradation of their physical properties at elevated temperatures encountered in many transportation and other environments.

Plastic foam core sandwich panels often involve serious compromises in their design and cost due to inherent structural limitations of the rigid foam insulation cores. In addition to the deflection of these panels due to compressive and tensile stresses in the skins, further deflection results from the relatively low shear modulus of the rigid foam material. The thicker the core, the more important shear deflection becomes, to the point of exceeding deflection due to bending. Under a sustained load, the plastic foam core is also subject to creep deformation, further increasing panel deflection, with resulting risk of failure of the sandwich panel.

These deficiencies of the core may require increasing the strength and stiffness of the composite through the use of excessively heavy and expensive skins. Alternately, the panel could be improved structurally by increasing the thickness or density of the foam core beyond acceptable limits, which also raises the costs of both material and shipping. The relatively low shear modulus of low density plastic foam cores also allows buckling of thin flat panel skins to occur at relatively low stress levels, again calling for overdesign of skins or higher density foam cores as a compensation. Low shear resistance and the absence of reinforcing elements within the foam core also permit the propagation under stress of cracks or fissures between the core and the panel skins as well as within or through the core itself, with resulting deterioration or structural failure of the panel. Still another difficulty is the low compressive strength of most plastic foams, which allows concentrated or impact loads to distort both skins and core.

Reinforcing frames or ribs of metal, wood, fiberglass reinforced plastic and other materials have been used in foam core sandwich panels to mitigate or overcome the structural limitations described above. Although both foam core and ribs contribute to the strength of these panels, the structural contribution of the ribs in such constructions is not fundamentally dependent upon the presence of the foam core.

An often serious drawback of widely spaced ribs is the creation of overly rigid sections of the structure within a generally more flexible panel. This can result in undesirable concentrated loads at the intersection of ribs and face laminates, especially with thinner face laminates made with higher strength composite materials. Structural properties of the composite may be improved by assembling between the skins a large number of individual blocks or strips of foam wrapped with fibrous reinforcing materials which connect the skins and fill the space between them. Impregnating resins are applied to both skin and core reinforcements during this layup process. Alternately, all components of skin and core reinforcement and foam may be positioned in a mold while in a dry and porous state, after which the mold is closed and resin is introduced under pressure, as in vacuum-assisted resin transfer molding, to flow into and impregnate the reinforcements. In either case, the process of preparing and inserting the individual foam and reinforcement components of the core is both labor intensive and expensive.

The present invention is directed to a reinforced foam core panel generally of the type disclosed in DE-A-1,949,209, as defined in the preamble of claim 1.

However, the reinforced foam panel disclosed in DE-A-1,949,209 includes foam components which are assembled and connected together by resin impregnated reinforcing web material which is hardened. The extremities of the hardened webs are frayed for better connection with the skin layers.

It is an object of the present invention to provide reinforced composite foam core panels and methods and apparatus for producing the same, which provide for significantly reducing the cost of producing foam core sandwich panels or walls having superior structural and thermal insulation properties.

According to one aspect of the present invention, there is provided a reinforced foam core panel as defined in the characterising clause of claim 1.

According to another aspect of the present invention, there is provided a method of producing a reinforced foam core panel as defined in claim 8.

The reinforced composite foam core panels or boards embodying the invention have optimum structural and thermal insulation characteristics without sacrificing one for the other. The reinforced foam core panel also has uses other than as a core for sandwich panels, such as in the fabrication of pipe insulation and in blocks or billets which may be machined to a particular shape.

In one embodiment of the invention, rigid foam insulation boards and thin porous flexible fibrous webs or sheets are stacked in alternating layers with adhesive between the layers, and the stack is then compressed while the adhesive cures, to form a thickened, reinforced composite board or core panel, referred to herein as a block or billet. The billet is cut through the alternate layers and along parallel spaced planes to form further, thinner reinforced foam core panels or boards each having spaced webs formed by strips of the fibrous sheets alternating with sections or strips of the foam boards with the web strips interconnecting the board strips whilst the porosity of the web strip is maintained.

Inexpensive, low labor methods may be employed to produce large, unitized foam core panels having integral, generally closely spaced structural reinforcing webs whose edge portions are exposed at the faces of the core panels to provide for bonding the edge portions of the webs, along with the strips of foam board between the webs, to sandwich panel skins which are applied to the core. The greater frequency of webs compared to a conventional structural rib construction generally permits the use of lighter weight reinforcing materials for both webs and skins. It also provides a larger number of lines of contact for bonding webs to skins. These lines of contact may be expanded in area to provide for improved resistance of structural forces which might otherwise lead to premature failure of the bond.

Structural webs or frames comprised of fibrous reinforcement and cured resin must transmit shear loads between the core and the sandwich panel skins along the lines of intersection between the edge portions of the webs and the panel skins. In the case of conventional larger and more widely spaced structural frames, these intersections are often strengthened by adding additional reinforcing fibers and resin to the frame members adjacent to the skins, in order to expand the area of intersection and thus create stronger connections. In panels embodying the present invention, markedly improved structural bonds may be achieved by forming fillets of bonding resin at the intersection of web edges and panel skins. This is accomplished during core manufacture by forming recesses within the foam adjacent the web edge portions to form a 45° bevel or other desired shape, such as rectangular or radiused. When skins are attached, the impregnating resin flows into the recesses, hardens and provides an expanded area of structural connection to both the web edge portions and the panel skins.

Resins used to impregnate sandwich panel skin reinforcements and to bond sandwich panel skins to cores typically exhibit significantly reduced bond strength when adhered to previously cured resins. Thus, even if the skin resin and the previously-cured web resin are of the same initial chemical composition, their line of contact is frequently the weak point in the composite structure. This is especially true if only the thin edges of the webs are in contact with the panel skins and if web edge portion fillets are not used. The foam core panels embodying the present invention incorporate porous web sheets of fibrous, absorptive and unimpregnated reinforcing material which are attached between the foam strips by pressure sensitive adhesive, stitching or other means, which maintain the webs in a dry, unimpregnated and substantially porous form. During the process of applying resin to the panel skin reinforcements, the resin flows into and impregnates the webs, including their edge portions which are in contact with the panel skin reinforcements, causing the webs to form integral, structural tie webs between the panel skins. If desired, the selection of relatively bulky and compressible fibrous reinforcements as the web material allows the foam core panel to be bent to conform to the shape of a mold.

Structural integration of these porous webs to skins may be enhanced beyond that achieved by simultaneous impregnation of the skins and generally flush porous webs, through expansion of the web edge portions at the area of attachment to the skins. The porous and unimpregnated webs are caused to protrude beyond the surface of the foam, and if desired, these protruding edge portions may be frayed to increase the separation of their fibers. When skin materials are applied to the core and pressure applied for bonding of the skins to the core, the protruding web fibers are caused to flare out or fold over, substantially increasing their area of contact with the skins as the impregnating resin cures. The features of porous and protruding webs and fillets may be combined if desired in the same core panel.

Beveled foam edges adjacent the web offer the additional advantage that these fillet grooves or recesses in the foam serve as channels to direct the flow of resin along the edges of the porous webs, thus promoting more rapid and thorough impregnation of the webs. In the case of cores with intersecting webs, the lines of intersection of the webs pass through the core, and resin may also travel through the core along the fillet grooves or recesses.

In a further embodiment of the present invention, composite reinforced foam core panels or boards are also stacked with interleaving fibrous sheets or webs and adhesive to form thicker core panels or boards comprising blocks or billets which are cut to form further rigid foam core panels or boards with reinforcing webs in a grid-like cellular configuration, such as rectangular, diamond or parallelogram shape. The grid-like core panels are stacked in a similar manner to form a billet with the webs extending in X-Y-Z or three different directions, and billets may also be formed with composite core panels stacked in a step-like manner and then cut along inclined parallel planes to provide core panels or boards with inclined truss-like webs. In another embodiment, the billets are formed with each reinforced core panel oriented at right angles with respect to adjacent core panels.

Since the strips of web material which interconnect the foam board strips of the basic (unskinned) core panels are porous, i.e. not impregnated with resin, it is possible to produce, out of any of the billets such as those described above, further core panels, without having to cut through billets having hardened resin impregnating the webs. This is accomplished by first making core panels having porous webs, according to methods disclosed herein, then flowing impregnating resin into the webs and curing the resin, without attaching skins to the faces of the cores. Fillet grooves or recesses may be included in the foam, in order to produce fillets in the finished core. If desired, the impregnated and cured cores may be machine sanded to remove surface resin and roughen the web edge portions and fillets for subsequent adhesive bonding to the skins.

According to another embodiment, billets may be produced with high density and low density foam boards in combination with fibrous webs to form reinforced composite panels with high density surface portions and lower density center portions, and reinforced composite core panels are laminated at the top and bottom of a billet after being rotated 90° to form reinforced core panels with additionally reinforced longitudinal edge portions for receiving connecting splines. Resilient foam panels may also be used between rigid foam boards for producing flexible composite core panels which may be curved.

According to another embodiment, foam core boards are stacked on an incline with fibrous sheets or strips between the boards and are then cut to form rectangular billets or panels with the parallel spaced reinforcing webs extending diagonally or at a bias for exposure at all edge surfaces of each panel or billet in addition to the parallel faces of the panels or billets.

Various embodiments of the invention will now be described with reference to the accompanying drawings, in which:-
Fig. 1 is a perspective view of a composite foam core billet and a reinforced foam board or panel embodying the invention;
Fig. 2 is an enlarged and exploded view of a corner portion of the composite billet shown in Fig. 1;
Fig. 3 is a fragmentary perspective view of another reinforced foam core billet, constructed from a stack of panels as shown in Fig.1, and showing another panel cut from the billet;
Fig. 4 is an enlarged and exploded perspective view of a corner portion of the billet shown in Fig. 3;
Fig. 5 is a fragmentary perspective view of another reinforced foam core billet constructed from a stack of panels as shown in Fig. 3;
Fig. 6 is an enlarged and exploded perspective view of a corner portion of the billet shown in Fig. 5;
Fig. 7 is a fragmentary perspective view of a stepped reinforced foam core billet constructed from a stack of panels embodying the invention;
Fig. 8 is an enlarged and exploded perspective view of a corner portion of the billet shown in Fig. 7;
Fig. 9 is a perspective view of an end portion of a reinforced foam core panel cut from the billet shown in Fig. 7;
Fig. 10 is a view similar to Fig. 9 and showing another reinforced foam core panel cut from the billet shown in Fig. 7;
Fig. 11 is a fragmentary perspective view of a modified reinforced foam core billet;
Fig. 12 is an enlarged and exploded perspective view of a corner portion of the billet shown in Fig. 11;
Fig. 13 is a fragmentary perspective view of another modified reinforced foam core billet;
Fig. 14 is an enlarged and exploded perspective view of a corner portion of the billet shown in Fig. 13;
Fig. 15 illustrates a typical use of a flexible panel cut from the billet of Fig. 13;
Fig. 16 is a fragmentary perspective view of a load bearing wall having a core formed from the panel shown in Fig 3;
Fig. 17 is fragmentary section of a portion of the walls shown in Fig. 16;
Figs. 18-22 are views similar to preceding views and illustrating the steps for producing a variable density and reinforced composite core panel embodying the invention;
Figs. 23 and 24 illustrate the steps for producing a reinforced foam core panel with additional reinforced longitudinal edge portions. embodying the invention;
Fig. 25 is an enlarged fragmentary section of a sandwich panel having a reinforced foam core panel embodying the invention;
Fig. 26 is a plan view of a machine for producing reinforced foam core panels embodying the invention;
Fig. 27 is a fragmentary section taken generally on the line 27-27 of Fig. 26;
Fig. 28 is a fragmentary section taken generally on the line 28-28 of Fig. 26;
Fig. 29 is a fragmentary section taken generally on the line 29-29 of Fig. 26;
Fig. 30 is a fragmentary section similar to Fig. 29 and showing the rotation of a foam board for producing a continuous stack;
Fig. 31 is a plan view of opposite longitudinal edge portions of a core panel as trimmed on the machine shown in Fig. 26 and with the longitudinal center portion broken away;
Fig. 32 is a fragmentary edge view of another reinforced foam core panel embodying the invention;
Fig. 33 is an enlarged fragmentary section of the core panel shown in Fig. 32;
Fig. 34 is a fragmentary edge view of another reinforced foam core panel embodying the invention;
Fig. 35 is a fragmentary section of the core panel shown in Fig. 34;
Fig. 36 is a greatly enlarged fragmentary section of a web portion of a reinforced foam core panel constructed similar to the panel shown in either Fig. 33 or Fig. 35; and
Fig. 37 is a fragmentary section taken generally on the line 37-37 of Fig. 35.

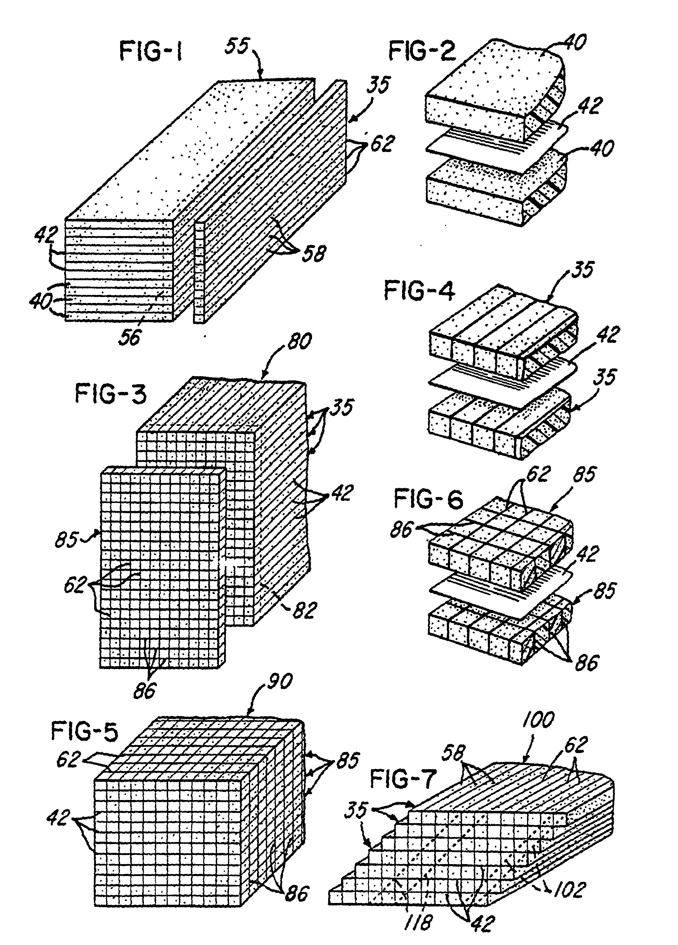

Fig. 1 illustrates a method of producing a composite reinforced foam board or panel 35. Alternating layers of rigid closed cell expanded foam boards 40 and thin sheets 42 of flexible fiberglass or other porous material are stacked to a height corresponding to the desired width of the panel 35. The boards 40 and sheets 42 receive coatings or layers of adhesive resins and are laminated under pressure in a platen press or under a vacuum bag to form a solid, thick composite board or panel referred to herein as a block or billet 55, which is of a predetermined size, for example, 1.22×1.22×2.44 metres (4' x 4' x 8'). The adhesive or resin, such as polyurethane or polyester resin which maintains its strength and stiffness at normal environmental temperatures, is selected to stiffen and/or waterproof and/or fireproof or otherwise modify the sheets 42 and is applied to the foam boards 40 and/or sheets 42 prior to stacking. If applied to the sheets 42, the resin may be in an uncured or partially cured "prepreg" state. After the adhesive cures and the laminating pressure is released, the billet 55 is cut along parallel spaced planes 56 by a large band saw or other suitable cutting means to form a series of the composite reinforced foam boards or panels 35. Thus each panel 35 has a stack of strips 58 formed by sections of the foam boards 40 and parallel spaced porous webs 62 which are formed by strips of the interposed sheets 42. The panels 35 may vary in thickness, for example, from less than 1.27 to 30.48 cm (one-half inch to twelve inches) or more, depending upon the use of the panels.

The porous web sheets 42 may comprise fibrous material, such as fiberglass mat or cloth, attached to the foam boards 40 in a manner which maintains the porosity of the sheet material, as for instance by applying pressure sensitive adhesive to the foam boards 40 and compressing the stack to form the billet 55, so that only the surface of the outer layer of fibers of the web sheets 42 contact the adhesive. Fibrous skin reinforcements may be applied to the faces of the foam panels 35 which are cut from the billet 55, to form sandwich panels in which resin applied to the skin reinforcements flows into and simultaneously impregnates the porous webs 62, which cure to form structural tie webs between the skins. If it is desired to form a bendable core, the porous webs 62 may comprise bulky and compressible fibrous material, such as polyester or fiberglass, which may be conformed to the desired curvature before application of impregnating resin.

When fibrous sheets 42 are cut by a band saw, the cutting operation frays the longitudinal edges of the webs 62. Thus, when skins are laminated by adhesive or resin to the sides of the panel 35, there may be penetration of the adhesive or resin into the fibers to form positive bonds of the webs 62 to the skins. This fraying action is limited with webs which have been impregnated and cured with adhesive or resin, but is quite extensive for fibrous webs which have been attached to the foam by means which maintain their fibers in a substantially dry and porous state.

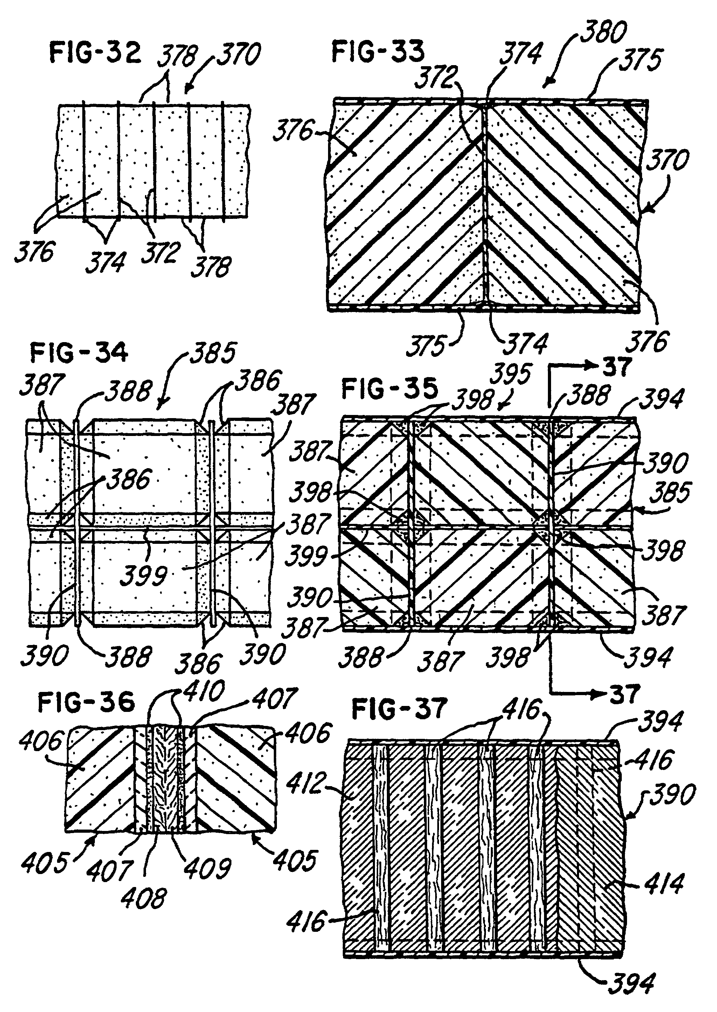

If desired, for greater accuracy in thickness or flatness, the foam panels 35 may be planed, sanded or otherwise abraded on one side or both sides before being laminated to the skins. These processes remove the surface of the foam while leaving the porous fibrous webs 62 to extend beyond the surface of the panel, as discussed later in connection with Fig. 32, for improved adhesion to sandwich panel skins. As the skins are pressed against the protruding fibrous webs, as shown in Fig. 33, the web fibers are caused to flare out or fold over, greatly increasing the area of contact between webs and skins for improved structural bonding as the impregnating resin cures.

When foam is removed from the surface of panels 35 having webs 63 which have been impregnated with resin and cured to become stiff, rather than maintained in a porous and flexible state, the webs are well suited for the application of cementitious materials which cure to form a rigid skin surface surrounding and reinforced by the webs 62.

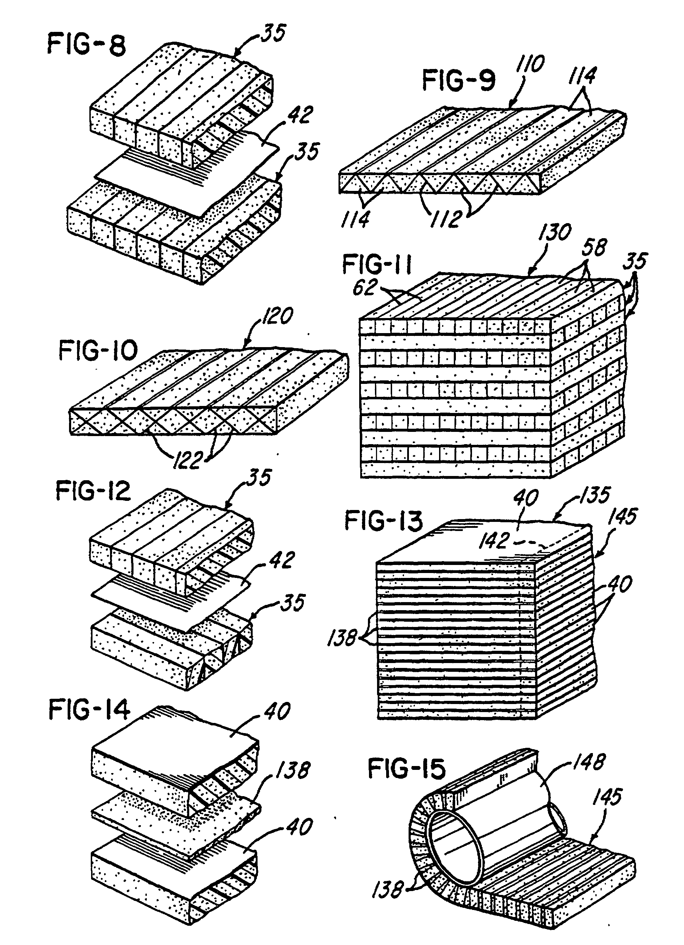

It is also within the scope of the invention to form a composite foam board or panel 35 by first laminating flexible sheets 42 of fiberglass or other porous and fibrous facer material to one or both sides of a foam board 40 and then before stacking feeding the foam boards with attached facer sheets 42 through a gang saw which cuts the laminated boards into the strips 58 and attached webs 62. Core panels having webs oriented in a triangular configuration in cross-section (see FIGS. 9 and 10) may be formed by cutting the foam boards with saws set at acute angles to cut strips of right-triangle or acute-triangle (such as 60°) cross-section. The strips 58 may then be stacked and the webs 62 bonded together by adhesive to form the composite foam panel 35. For example, commercially available rigid roof insulation boards or panels each consisting of a closed cell polyisocyanurate foam core bonded on each side during the foaming process to fiberglass or reinforced cellulosic felt facer sheets, such as those manufactured by NRG Barriers, Inc. in Saco, Maine, may be fed through a gang saw to form foam strips 58 each having facer strips or webs 62 attached to opposite sides. Thus when the strips are stacked to form a panel 35, double webs 62 are sandwiched between each pair of adjacent foam strips 58. If it is desired to produce core panels 35 comprising insulation boards which have been foamed between facer sheets but which have porous, fibrous webs 62, the porous and fibrous web material may be stitched or adhesively attached to the insulation board facer sheets prior to the foaming process. During the foaming process, the facer sheets act as a barrier to the foam chemicals, thus maintaining the porosity of the stitched layer.

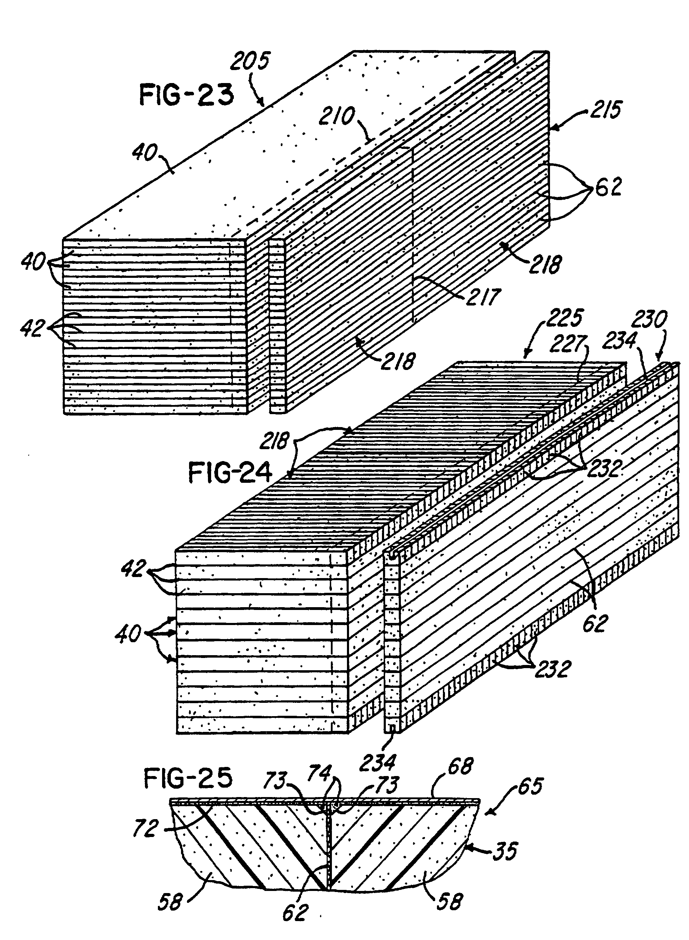

Referring to FIG. 25, a composite foam core sandwich panel 65 is produced with a composite foam core panel 35 laminated to a pair or set of skins 68 which may be fiber reinforced plastic, aluminum, plywood or other suitable facer material. Each skin 68 is attached to the panel 35 by a layer 72 of adhesive or resin. Prior to applying the adhesive or resin layer 72 or impregnating resin to the fibrous skin 68 or to the corresponding side surface of the foam core panel 35, foam may be removed adjacent the edges of the webs 62 by abrasive or cutting tools, for example, to form beveled corners or recesses 73 along one or both sides of the length of each foam strip 58 to expose the longitudinal edge portions of each web 62. Thus when the adhesive or resin layer 72 is applied, the adhesive or resin fills the recesses and forms the fillets 74 and provides a stronger bond between the edge portion of each web 62 and the adjacent skin 68 for increasing the strength and stability of the foam core sandwich panel 65. Since the webs 62 comprise porous and fibrous material, this bond is enhanced by the penetration of the adhesive or resin throughout the fibers of the webs so that the webs 62 form connecting tie webs between the skins. The fillet recesses 73 may also be formed in the foam boards 40 by machining grooves within the faces of the foam boards prior to stacking and bonding the boards and web sheets 42, and then cutting the boards within the grooves with blades thinner than the grooves.

Referring to FIGS. 3 and 4, the composite reinforced foam boards or panels 35 of FIG 1, which may be provided with corner recesses 73 as shown in Fig. 25, and which may have webs perpendicular to the faces or oriented in a triangular configuration in cross section (FIGS. 9 and 10), are arranged in a stack with a fibrous sheet 42 located between each pair of adjacent panels 35 after adhesive is impregnated into the sheets 42 or applied to the surfaces of the panels 35. The spacing and composition of the sheets 42 may be varied within the stack to achieve different levels of strength at various locations in the stack. This stack of alternating panels 35 and sheets 42 is compressed until the adhesive cures to form a billet 80 which may have the same dimensions as the billet 55. The billet 80 is then cut along parallel spaced planes, one indicated by the dotted lines 82, to form a series of composite rigid foam boards or panels 85 each of which has a grid-like pattern of intersecting continuous strips or webs 86 and interrupted strips or webs 62.

The composite foam panels 85 are ideally suited for use in producing sandwich walls or panels which require high strength in both directions, such as, for example, the cores where resin impregnated fiberglass skins are built up on opposite sides of each panel 85. It is understood that the fillet recesses 73 may be used along the edge portions of all webs 42,62 and 86 to provide a higher strength bond or connection between each of the webs and between each of the webs 42 and 62 and the overlying sandwich panel skins. These fillet recesses may be formed by machining grooves into the faces of the foam boards 40 and panels 35 prior to their being stacked and bonded as previously described, and the grooves are located along the lines of predetermined billet bandsaw cuts which will yield panels 85. Alternatively, the fillet recesses may be formed by machining the faces of the panels 85 after cutting the panels 85 from the billet 80. It is also understood that the spacing as well as the composition of the webs 62 and 42 may differ from each other as required by structural considerations. Core panels 85 may also be produced by cutting panels 35, before stacking, in a direction perpendicular to the planes of the webs 62 and stacking and bonding the resulting composite strips between alternating layers of web sheets or strips. Before bonding the composite strips and web strips together, the composite strips may be machined to provide resin distribution grooves and/or web fillet recesses.

If it is desired to produce a core panel 85 which may be curved in two directions, for example to produce a reinforced foam core which has a compound curve to form a boat hull, unimpregnated bulky and compressible porous non-woven polyester, fiberglass or other fibrous reinforcing materials may be used to form the sheets 42. The panel may then be deformed to the desired compound curvature during the layup of the boat hull. The resin which is used to form the skins penetrates the porous webs between the foam blocks and then hardens to form the tie webs.

It is also within the scope of the invention to produce a core panel similar to the core panel 85 wherein relatively low density closed or open cell crushable foam sheets or low density thermoformable plastic sheets with a heat softening temperature substantially less than that of the foam boards 40, are used in place of the fibrous sheets 42 to form the crossing or intersecting webs. When the panel is curved, for example to form a boat hull, the webs are crushed or are heat-formed, avoiding the creation of undesirable gaps or voids between the foam blocks formed from the boards 40.

In reference to FIGS. 5 and 6, the composite foam panels 85 each of which may be provided with beveled corner recesses 73 and each having a grid-like arrangement of intersecting webs 62 and 86, are arranged in a stack with interleaving fibrous sheets 42 with adhesive impregnated into the sheets or applied to the side surfaces of the panels 85. Alternately, the fibrous sheets 42 may be attached to the foam panels 85 by pressure sensitive adhesive or other means which maintain the porosity of the web fibers for subsequent impregnation by resin. The stack is compressed to form a large block or billet 90 wherein the webs 42, 62 and 86 extend in X-Y-Z or three different directions. The billet 90 may be used as a reinforced insulated material for fabrication or may be cut into composite foam slabs, boards or panels, and provided with beveled corner recesses 73 on the panel faces if desired, for use in making sandwich panels of enhanced strength. Specialized sheets may be substituted for some of the fibrous sheets 42 to provide specific properties within the composite foam panels, for example, fire barriers or electromagnetic shielding within the sandwich panel structures.

Referring to FIGS. 7 and 8, the composite foam boards or panels 35 are stacked on an incline in a step-like manner and are adhesively connected or bonded by interleaving fibrous sheets 42 with the stacking angle at 45° or other desired angle. This stack is compressed until the adhesive cures to form a billet 100. When the billet 100 is cut along parallel spaced planes 102 (FIG. 7), which are inclined at 45° with respect to the panels 35, the resulting product is a composite foam board or panel 110 (FIG. 9) which has longitudinally extending strips or webs 112 formed by the sheets 42 and separating longitudinally extending foam strips 114 formed by the foam boards 40. The foam strips 114 are triangular in cross-sectional configuration, and the webs 112 extend at 45° angles with respect to the side surfaces of the composite foam panel 110.

As shown in FIG. 9, the opposite longitudinal edges of each web 112 are exposed at the side surfaces or faces of the panel 110. Thus when the composite foam panel 110 is sandwiched between suitable skins to form a sandwich foam core panel, the longitudinal edge portions of the webs 112 are bonded to the skins and form a truss-like arrangement of the webs between the skins to provide a foam core panel with substantial strength and stability in both longitudinal and transverse directions, as desired in many applications. As shown in FIG. 10, when the billet 100 is cut by the band saw along parallel spaced planes 118 (FIG. 7), the resulting product is a composite foam panel 120 having longitudinally extending strips or webs 122 arranged in a crossing or X-shaped pattern. When a composite foam panel 120 is adhesively laminated to skins to form a sandwich foam core panel, longitudinal edge portions of the crossing webs 122 are banded to the skins in the same manner as described above to form sandwich panels with high resiliency and impact resistance for applications such as boat hulls.

Figs, 11 and 12 illustrate composite foam core panels 35 which are stacked and adhesively bonded together with the strips or webs 62 in each panel 35 extending perpendicular to the webs 62 of each adjacent panel 35 for the purpose of producing another reinforced foam block or billet which may be cut or fabricated for different applications. If desired, fibrous sheets 42 may be adhesively bonded between the panels 35 to provide increased strength and stability when the billet 130 is cut. The thickness and number of layers of panels 35 and interleaving fibrous sheets 42 may also be selected so that the billet 130 forms a reinforced panel of appropriate overall thickness for use as a reinforced core between sandwich panel skins.

In reference to Figs. 13-15, a billet 135 is formed by stacking rigid foam boards 40 and resilient closed or open cell foam panels 138 in an alternating manner and with a layer of adhesive between each interface. Fibrous sheets (not shown) corresponding to the sheets 42 are interposed between the rigid foam boards 40 and resilient foam panels 138. The billet 135 is then cut along parallel spaced planes, one shown by dotted line 142, to form flexible composite foam panels 145. One application of the panels 145 is shown in Fig. 15 wherein a conduit or pipe 148 is wrapped with flexible panels 145 for thermally insulating the pipe and the fluid flowing through the pipe. The fibrous sheets provide the panels 145 with increased compression strength in a radial direction. It is also within the scope of the invention to use the prelaminated rigid roof insulation panels with a foam core bonded to fiberglass or other porous facers, as mentioned above, in place of the foam board 40 and the interposed fibrous sheets 42.

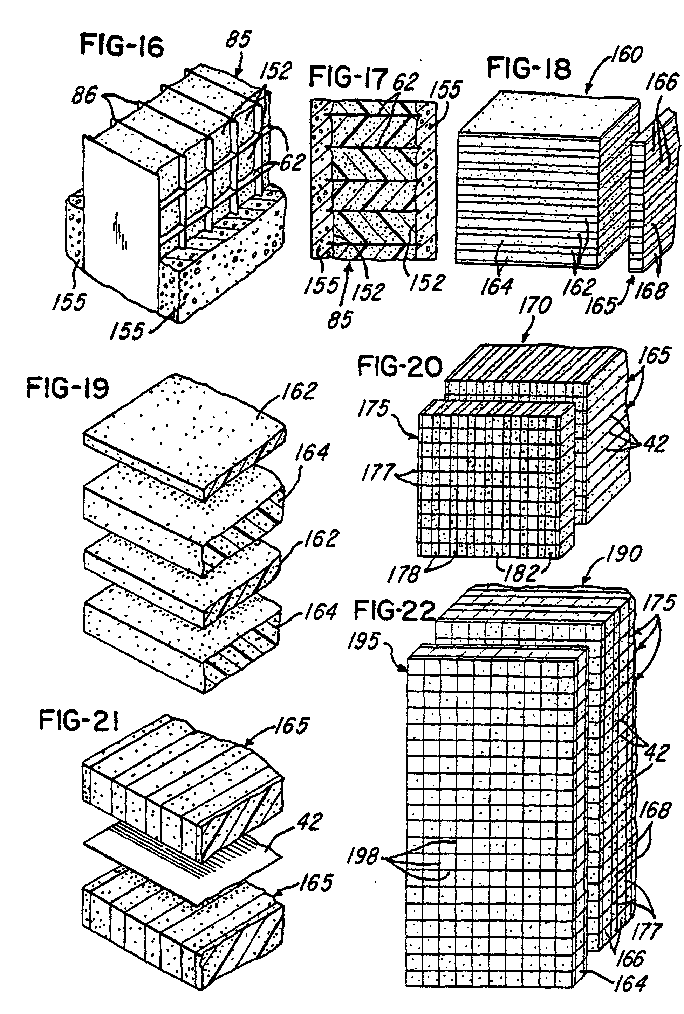

Figs. 16 and 17 illustrate one application of a composite foam panel 85 with a grid-like arrangement of intersecting webs 62 and 86 to form a load bearing wall for a building. For such application, the side surfaces or faces of each composite foam panel 85 are exposed to heat or a solvent or abrasion so that the faces of the foam blocks between the webs 62 and 86 shrink to form recesses or cavities 152 between the webs 62. A settable material such as stucco cement 155 or plastic resin is applied to the opposite faces of the panel 85 to provide the panel 85 with resistance to water, fire, etc. in addition to a decorative appearance. The settable material fills the cavities 152 and bonds to the exposed edge portions of the perpendicular webs 62 and 86 to provide a high strength insulated wall assembly which is reinforced by fiberglass webs. As a result of the perpendicular webs 62 and 86 within the composite foam panel 85, the panel is capable of supporting a substantial load and can be used to form a vertical wall of a building without the use of horizontally spaced support columns.

FIGS. 18-22 illustrate the construction of reinforced core panels which vary in foam density through the thickness of the panels. Referring to FIGS. 18 and 19, a composite foam billet 160 is formed by stacking in an alternating manner high density or web reinforced rigid foam boards 162 and low density rigid foam boards 164. The top and bottom high density foam boards 162 have a thickness one-half the thickness of the intermediate high density foam boards 162. The foam boards are adhesively bonded together and compressed, and after the adhesive cures and the compression pressure is released, the billet 160 is cut along parallel spaced planes to form a series of composite foam panels 165 each having alternating strips 166 of high density foam and alternating strips 168 of low density foam. If desired, thin sheets (not shown, corresponding to the porous sheets 42) may be inserted between the foam boards 162 and 164 to form web producing strips within the foam panels 165.

Referring to FIG. 20, a series of the composite foam panels 165 are arranged in a stack with interleaving sheets 42 and with layers of adhesive to form a billet 170. The billet 170 is cut along parallel spaced planes to form a series of composite reinforced foam panels 175 which have vertically spaced continuous fibrous strips or webs 177 and horizontally spaced strips 178 of high density foam separated by strips 182 of low density foam.

As shown in to FIG. 22, a series of panels 175 are arranged in a vertical stack with interleaving sheets 42 and adhesive layers to form a billet 190 which is constructed similar to the billet 80 shown in FIG. 3, that is, with vertical webs 177 intersecting horizontal sheets 42. The billet 190 is cut along parallel spaced planes which intersect the center of the high density foam strips 166 to form a series of composite foam panels 195.

Each of the panels 195 has opposite side surfaces formed by the high density foam boards 162 and a center foam core portion formed by the low density foam boards 164. In addition, each of the panels 195 has a X-Y grid pattern of reinforcing webs 198 formed from sections of the fibrous sheets 42. The vertical webs 198 are interrupted and intersect continuous horizontal webs 198. Reinforced composite foam panels 195 are ideally suited for use as a core within the walls for a recreational vehicle or trailer or refrigerated truck body which commonly receive aluminum or fiberglass reinforced plastic skins. The panels 195 provide for high strength and stability with a high density foam surface behind the skins and a low density center core to provide insulation at a cost significantly lower than the cost of producing the composite foam panel entirely of high density foam.

If it is desired to form a reinforced panel having varying foam densities at the surfaces and center of the panel but having only a single set of parallel spaced webs, rather than a grid-like pattern of intersecting webs, the billet 170 shown in FIG. 20 may be cut along parallel spaced planes extending in another direction through the center of the high density foam layers 178 to produce such a panel.

Referring to FIG. 23, a billet 205 is constructed in the same manner as the billet 55 (FIG. 1) from a stack of rigid foam boards 40 with fibrous sheets 42 positioned between the foam boards 40 and bonded to the boards by layers of adhesive. The billet 205 is cut longitudinally along parallel spaced planes, one indicated by the dotted line 210, to form a series of composite foam panels 215 constructed substantially the same as the panels 35 described above in connection with FIG. 1. Each of the panels 215 is cut in half along a line 217 to form two half panel sections 218.

Referring to FIG. 24, a billet 225 is constructed by stacking a series of foam panels 40 with interspaced fibrous sheets 42 in the same manner as the billet 55 is formed as described above in connection with FIG. 1. However, in the construction of the billet 225, the half panel sections 218 are each rotated 90° and placed as the top and bottom layers of the billet 225 so that the fibrous web strips 62 on the top and bottom layers extend laterally across the width of the billet 225 and are adhesively bonded to the fibrous sheets 42. After the billet 225 is formed, it is cut along parallel spaced planes 227 to form a series of reinforced composite foam panels 230.

Each of the panels 230 is constructed substantially the same as each of the panels 35 with the exception that the longitudinal edge portions of each panel 230 have longitudinally spaced parallel webs 232 which extend laterally across the thickness of the panel 230 and are bonded to the adjacent strips 62 for adding extra reinforcement to the edge portions. A longitudinally extending slot or groove 234 may be formed in each edge portion of each panel 230, and each groove 234 intersects the cross webs 232. The reinforced composite foam panels 230 are ideally suited for use in forming the side walls and ceiling of an insulated refrigeration building or room where rigid splines of wood or other material extend into mating grooves 234 of adjacent panels for connecting the edge portions of the panels. In such installations, the longitudinal edge portions of the insulating panels are subjected to substantial stresses where the panels join together. The cross webs 232 reinforce the edge portions of the panels 230 and permit the panels to withstand substantial lateral forces while also being constructed of a low density foam material.

It is understood that all configurations of core panels which are described herein have webs comprised of flexible material which is porous and impregnated with adhesive or resin and that alternately they may have webs which are fibrous, porous and unimpregnated. It is also understood that all configurations of core panels may have beveled foam corner recesses 73 at the edges of all webs to provide for fillet connections to intersecting webs or to sandwich panel skins, and that all webs may protrude from core panel faces as will be described later.

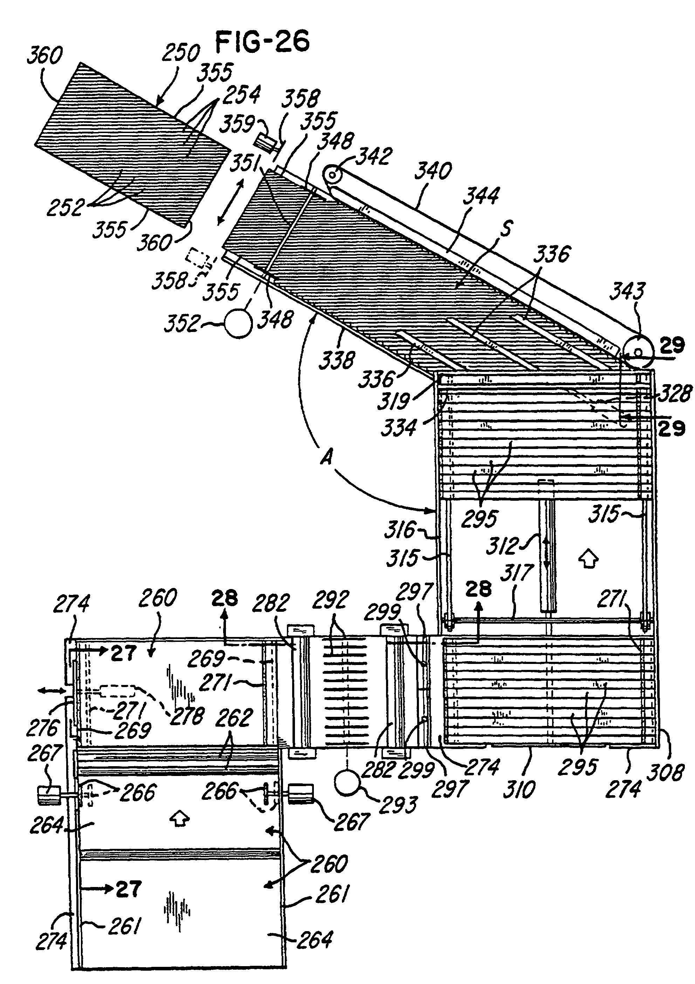

Fig. 26 illustrates somewhat diagrammatically the plan view of a machine for the continuous production of a rectangular reinforced core panel 250 which may have a thickness, for example, from 2 cm to 122 cm (2 inches to 4 feet), a width of 122 cm (4 feet) and a length of 244 cm (8 feet) or longer. The rectangular panel 250 is constructed similar to the reinforced core panel 35 described above in connection with Figs. 1 and 2 and includes a plurality of strips or boards 252 or rigid plastics foam material, and the boards 252 are separated by the interleaving sheets or strips or webs 254 of flexible fibrous material such as the fiberglass mats impregnated with a resin and described above in reference to the sheets 42 of web material.

As apparent in Fig. 26, the strips or boards 252 and sheets or webs 254 extend diagonally of the panel 250 so that all of the ends of the webs 254 are exposed along all four edge surfaces of the panel. This exposure of the webs 254 along the longitudinal edge surfaces of the panel as well as the lateral edge surfaces of the panel provide for high edge strength in order to obtain stronger joints or connections between abutting edge surfaces of adjacent panels. For example, when spline receiving grooves 234 (FIG. 24) are formed within the longitudinal edge surfaces of the panel 250 for receiving a connecting spline, the end portions of the webs also receive the grooves and extend around the spline to provide for a substantially stronger connection between the panel and the spline.

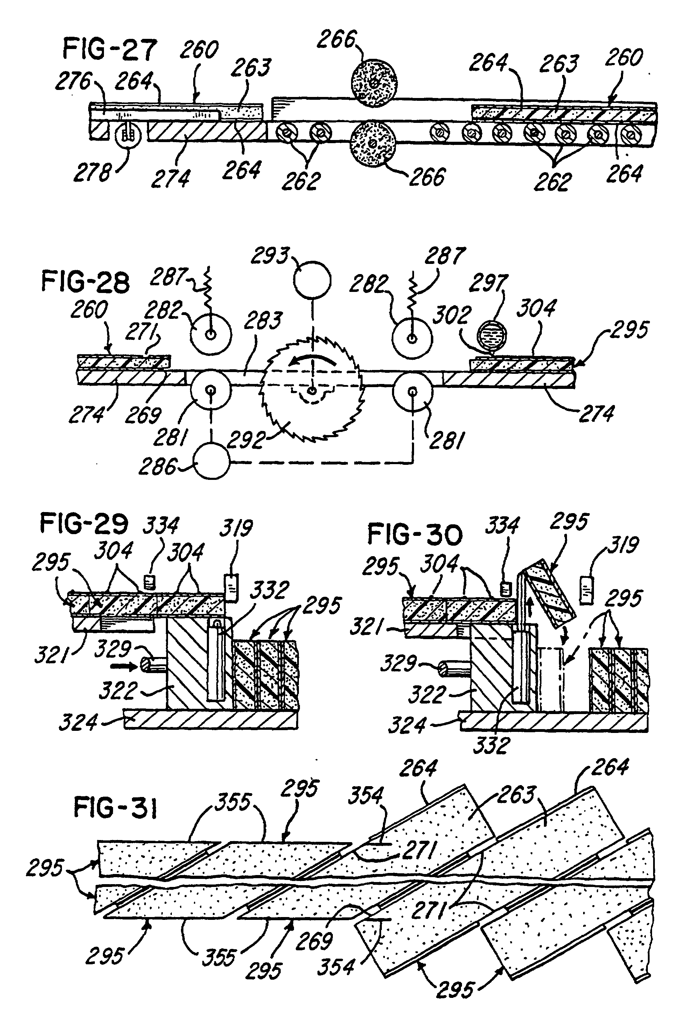

The machine shown in FIG. 26 is capable of successively producing the panels 250 according to a desired thickness. To produce each panel 250, roof insulation boards 260 or other foam boards with sheets or webs preapplied to one or both surfaces are successively fed into the machine between parallel guide rails 261 which project upwardly from a horizontal platform or table formed by parallel spaced rollers 262 (FIG. 27). As mentioned above, each of the boards 260 may be a rigid roof insulation board or panel 263 consisting of a closed cell polyisocyanurate foam core bonded on each side or face during the foaming process to fiberglass mats or reinforced cellulosic felt facer sheets 264, for example, such as those manufactured by NRG Barriers, Inc. mentioned above.

The boards 260 are successively fed between the rails 261 on the rollers 263 and between upper and lower pairs of grinding wheels 266 (FIGS. 26 and 27) driven by corresponding electric motors 267. The wheels 266 are positioned to remove strips of the facer sheets 264 on the top and bottom of each board 260 at opposite ends of the board to expose corresponding bands 269 and 271 of the rigid foam board 263, for reasons which will be explained later.

After each board 260 passes between the opposing pairs of grinding wheels 266, the board is received on a table or platform 274 (FIG. 27) which supports a pusher bar 276 actuated by a fluid or air cylinder 278. When the piston rod of the cylinder 278 is retracted, the board 260 is moved longitudinally on the table 274 by the pusher bar 276 until the end of the board 260 is picked up by a pair of feed rolls 281 and 282 (FIG. 28) positioned within an opening 283 in the table 274. The lower roll 281 is driven by an electric motor drive unit 286, and the upper roll 282 is urged downwardly against the top of the board 260 with a predetermined force by a set of springs 287. The rolls 281 and 282 feed the board 260 longitudinally through a set of gang saws 292 which are driven by a motor 293. The saws 292 cut the board 260 into smaller boards or strips 295 which are then fed by another set of feed rolls 281 and 282 onto an extension of the table 274.

A pair of axially aligned tubular manifolds 297 (FIGS. 26 and 28) are positioned above the table 274 and are supplied with a suitable urethane foam adhesive which is pumped to the manifolds through supply lines 299 (FIG. 26). The bottom portion of the manifolds 297 support a pair of axially spaced nozzles 302 for each of the strips or boards 295 and are effective to apply a pair of parallel spaced and longitudinally extending beads 304 of adhesive along the entire length of each board 295. While not shown in FIG. 26, the next successive batch of boards 295 being fed by the feed rolls 281 and 282 push the preceding batch or set of boards 295 to the position shown in FIG. 26 where the forward ends of the boards 295 are stopped by a guide rail 308. For purpose of avoiding excessive lines, the adhesive beads 304 on the top facer sheets or strips of the boards 295 are not shown in FIG. 26.

A pusher bar 310 (FIG. 26) is connected to the piston rod of a fluid or air cylinder 312 and is positioned on the table extension 274. When the cylinder 312 is actuated to retract the piston rod, the bar 310 pushes the cut set of boards 295 laterally onto a pair of endless conveyor belts 315 and between the guide rail 308 and a parallel guide rail 316. The belts 315 are directed around a set of pulleys mounted on a pair of cross-shafts 317. The belts 315 are driven continuously to move the boards 295 laterally by sliding friction and against a cross stop rail 319 (FIG. 29) positioned above a supporting platform or table 321 having an upper surface flush with the upper runs of the belts 315.

As shown in FIGS. 29 and 30, an elongated pressure member or ram 322 is supported at the end of the table 321 by a platform or table 324 and is guided for reciprocating movement in a linear direction which forms an acute angle with the path of the boards 295 on the conveyor belts 315. The upper surface of the ram 322 is flush with the upper surface of the table 321, and a fluid or air cylinder 328 (FIG. 26) has a piston rod 329 (FIG. 29) for reciprocating the ram 322 between an extended position (FIG. 29) and a retracted position (FIG. 30). When the ram 322 is retracted, a pair of air cylinders 332 within the ram 322 are actuated to extend their piston rods upwardly for flipping or rotating the board 295 supported by the ram 322 through an angle of 90° so that the board drops downwardly onto the table 324 in front of the ram 322, as shown in FIG. 30. A cross rail 334 (FIG. 29) prevents the next successive or adjacent board 295 from elevating with the preceding board 295 when the cylinders 332 are actuated. When the ram 322 is extended (FIG. 29) the board 295 which has been dropped in front of the ram, is pressed by the ram against the preceding board 295 for continuously producing a stack S of the boards 295 while the stack is supported by the table 324 and the adhesive beads 304 cure to connect the boards.

As also shown in FIG. 26, the stack S of boards 295 are confined under rails 336 and between a rail 338 and an endless belt 340. The belt 340 extends around a set of rollers 342 and 343 and along a backup rail 344, and preferably, the belt 340 is formed by an endless belt which moves with the boards 295 and slides along the rail 344 to reduce friction between the boards and the rail 344. The parallel rails 338 and 334 form a predetermined angle A with the parallel rails 308 and 316. For example, the angle A may be on the order of 120° so that the boards 295 forming the continuous stack S extend transversely or at a biased angle relative to the direction of movement of the stack S as the boards 295 are compressed together and advanced in a step by step manner when the ram 322 is extended. Referring to FIGS. 26 and 31, a pair of edge trim saws 348 are supported by a cross shaft 351 driven by an electric motor 352 or by separate motors and are positioned to cut the boards 295 forming the stack S along parallel spaced lines 354 (FIG. 31) for removing the stepped-like end portions of the boards 295 and provide the advancing continuous stack S of boaras 295 with smooth parallel longitudinal edge surfaces 355. If the boards 260 with preattached sheets 264 of web material are produced with inclined end surfaces, the edge trim saws 348 may be omitted.

A traveling cut off saw 358 is driven by a motor 359 and is supported by a track (not shown) for lateral movement across the stack S of boards 295. The saw 358 cuts the advancing stack S of boards at longitudinally spaced intervals for successively producing the reinforced foam core panels 250 and to provide the panels with smooth parallel end surfaces 360. As a result of the production apparatus or machine shown in FIG. 26, all of the parallel spaced webs 254 of each foam panel 250 extend at an angle of about 30° with respect to the longitudinal edge surfaces 355 so that the ends of the webs are not only exposed at opposite end surfaces 360 of the panel 250 but are also exposed along the longitudinal edge surfaces 355 of the panel If the panel 250 is cut along planes parallel to the surfaces 355 or 360, the resulting panels have webs inclined relative to the faces of the panels.

As shown in FIG. 31, as a result of the removal of strips or bands 269 and 271 of the facer sheets 264 on each panel or board 260, the ends of the webs 254 are recessed inwardly from the longitudinal edge surfaces 355 of the panel 250 as determined by the saw cuts 354. Thus either before or after the panel is laminated to parallel spaced skins, the edge surfaces 355 may be precisely machined without the cutting tools contacting and fraying the webs 254 to obtain precision butt joints between the longitudinal edge surfaces of adjacent panels 250 when the panels are assembled together.

Reinforced core panels with improved structural properties and having two crossing sets of parallel webs extending at acute angles with respect to the longitudinal edge surfaces of the panel may be formed by substituting for the composite boards 260 previously formed panels 250 with overlying web sheets 42. The core panels will then have diamond- or parallelogram-shaped cells between the webs.

FIG. 32 illustrates a modified reinforced foam core panel 370 which is constructed similar to the core panel 35 except that the parallel spaced porous fibrous webs 372 each has opposite edge portions 374 which protrude or project beyond the outer surfaces of the foam strips or boards 376 sandwiched between the webs 372. The core panel 370 with the protruding web edge portions 374 may be constructed in a manner as described above in connection with the core panel 85 shown in FIG. 16, that is, by removing outer portions of the foam boards 376 to form recesses 378 between the edge portions 374 of the porous webs 372.

The core panel 370 may also be produced by feeding a continuous strip of the flexible porous web material from a supply roll onto a continuously formed or expanded foam roof board having a width somewhat less than the width of the strip of web material. For example, a continuous strip of flexible and porous fibrous web material may be attached by pressure sensitive adhesive to one of the fiberglass facer sheets on a continuously formed strip of roof board. The continuous roof board with the attached web strip are then cut at longitudinally spaced intervals and stacked to form the core panel 370, for example, with pressure sensitive adhesive attaching the web strips and foam boards together. Before bonding the foam boards and web strips together, the boards may be machined to form resin distribution grooves and/or fillet recesses.

As shown in FIG. 33, when a core panel 370 is sandwiched or pressed between opposite fiberglass skins 375 to form a composite panel 380, the fibers forming the projecting edge portion 374 flare outwardly to increase the bonding area between each web 372 and each skin 375. Preferably, the resin is injected or distributed into the fiberglass skins 375 by a vacuum or differential pressure process so that the resin not only penetrates between the fibers within the skins but also between the fibers forming the porous webs 372. As a result, the webs 372 form integral and positive tie webs connecting the skins 375 after the resin cures.

Referring to FIGS. 34 and 35, a reinforced foam core panel 385 is constructed by cutting the panel from a billet 90 as described above in connection with FIG. 5. The panel 385 includes beveled corner fillet grooves or recesses 386 within the foam boards 387 in all three X-Y-Z directions. The recesses 386 expose the edge portions 388 of all of the porous flexible fiberglass webs 390 along the X-Y grid pattern on each side or face of the core panel 385 and also expose the edge portions of the interrupted webs within the core panel. Thus some of the recesses 386 extend through the panel 385 at the intersections of the continuous and interrupted webs 390. The edge portions 388 of all webs 390 may also protrude from the faces of the foam boards at all intersections of webs and all intersections of webs with skins.

When the core panel 385 is sandwiched between composite or fiberglass skins 394 (FIG. 35) to form a composite reinforced panel 395, the resin which is sucked between the fibers within the skins 394 by vacuum is also sucked through the recesses 386 and between the fibers within the fiberglass webs 390. As a result, the resin within the recesses 386 forms fillets 398 which positively connect the web edge portions 388 to the skins 394. The fillets 398 also connect the support webs 399 extending within the foam boards parallel to the skins 394 to the primary webs 390 which tie the skins together. The support webs 399 cooperate with the rigid foam to prevent buckling of the primary support or tie webs 390. Although only one intermediate web 399 is shown in FIG. 35, one or more intermediate webs may be used with any of the core panels described herein, and may be pre-impregnated or porous and may also be orientated at an acute angle to the skins of the panel.

It is also apparent that the X-Y grid of fillet recesses 386 within each face of the core panel 385 and the fillet recesses extending throughout the core panel, serve as resin distribution passages or channels for assuring that the resin fills all of the porous webs 390 and the fillet recesses 386. Prior to attaching webs 390, web fillet recesses and/or resin distribution grooves may also be formed in the core panels by machining into the foam boards grooves which will later be split by the gang saws. Protruding webs may be formed by saw blades adjacent the gang saw blades but sufficiently smaller to miss the facer sheets but rabbet the foam to the width of the desired protrusion.

A greatly enlarged fragmentary section of a modified reinforced foam core panel, is shown in FIG. 36. In this modification, adjacent expanded foam roof boards 405 are constructed as described above in connection with the panels 35 and 85 and include foam boards 406 with attached fiberglass facer sheets 407. A dry, porous fibrous web material includes adjacent layers 408 and 409 sandwiched between the facer sheets 407 and attached by layers 410 of pressure sensitive adhesive. The layers 408 and 409 of web material are stitched together, and each layer has parallel linear fibers extending at 45 degrees with respect to the side surfaces or skins of the panel 405. The layer 408 of fibers extend at 45 degrees in one direction, and the adjacent layer 409 of fibers extend at 45 degrees in the opposite direction. Thus the fibers in one layer extend at 90 degrees with respect to the fibers in the adjacent layer.

FIG. 37 illustrates the construction of a web 390 within the core panel 395 described above in connection with FIG. 35. Each porous and flexible fibrous web 390 includes a layer 412 of parallel linear fibers which extend at an angle of 45 degrees in one direction relative to the skins 394 and a layer 414 of parallel linear fibers which extend at an angle of 45 degrees in the opposite direction with respect to the skins 394. The layers 412 and 414 are separated by parallel spaced bundles 416 of linear fibers which extend at right angles or normal to the skins 394 and define therebetween resin distribution channels. The fiber layers 412 and 414 and bundles 416 of fibers are stitched together to form a porous web which is attached to the adjacent foam boards, preferably by pressure sensitive adhesive. Thus when resin is pumped or sucked into the pores or voids between the glass fibers within the skins 394, the resin also flows within the pores or voids between the fibers within the webs and the passages between the bundles of fibers so that each web 390 is fully impregnated with resin and forms an integral and positive tie web connection between the skins 394. The spacer bundles may also be oriented parallel or at an acute angle to the skins depending on the desired direction of resin flow.

In lieu of spaced bundles, the fibrous reinforcement layers may be separated by random mat, scrim, or other fibrous material having crossing layers of fibers with interconnected interstices conducive to relatively free flow of resin through the plane of the web. Resin flow through the webs may also be improved by leaving gaps in the fibers of the primary stitched reinforcement layers which comprise the webs, rather than by separating the primary layers by spaced bundles as described above.

Since the bending loads in a sandwich panel, such as the panel 395, result in shear forces in the core panel 385, and the forces are generally oriented at 45 degrees relative to the panel skins, the webs 390 effectively resist the shear within the core. That is, the plus and minus 45 degree orientation of the glass fibers within the layers 408 and 409 greatly increase the structural and cost efficiency of the reinforcing webs 390.

While the forms of reinforced foam panels herein described and their method and apparatus of construction constitute preferred embodiments of the invention, it is to be understood that the invention is not limited to these precise forms, method steps and apparatus, and that changes may be made therein without departing from the scope of the invention as defined in the appended claims.

## Claims

1. A reinforced foam core panel (35; 85; 110; 120; 145; 165; 175; 195; 215; 230; 250; 370; 380; 385; 395) adapted for use between generally parallel skins (68; 375; 394), comprising a plurality of boards (40; 58; 114; 178, 182; 162, 164; 252; 376; 387; 406) of rigid plastics foam material with each board having opposite faces, a strip (62; 86; 112; 177; 198; 254; 372; 390; 408, 409; 412, 414, 416) of reinforcing web material (42) overlying at least one of said faces of each said board, said boards of foam material being arranged in a stack with said strips of web material disposed between said boards, said boards of foam material and said strips of web material being connected together to form a core panel with said boards having opposite side surfaces and with said strips of web material having edge portions extending to said opposite side surfaces, said side surfaces of said boards and said edge portions of said strips of web material being attachable by an adhesive resin to the skins, **characterised in that** the web material (42) is a porous and fibrous flexible web material, and that said boards of foam material and strips of web material are connected together whilst maintaining substantial porosity throughout said strips to permit the flow of resin through said strips between said boards of foam material to form tie webs for integrally interconnecting the skins.

2. A reinforced foam core panel as defined in claim 1, wherein each of said boards (406) of foam material includes flexible and fibrous faces sheets (407) bonded to said opposite faces, and said strips of porous and fibrous web material (408, 409) are disposed between said facer sheets.

3. A reinforced foam core panel as defined in claim 1 or 2, wherein said boards of foam material (58; 387) define fillet recesses (73; 386) within said side surfaces adjacent said edge portions (388) of said strips of web material (62; 390, 372), said recesses being intended to receive the resin (72) for increasing the bond of said strips to said skins (68; 394).

4. A reinforced foam core panel as defined in claim 1, 2 or 3, wherein each said strip of web material (42) includes adjacent layers (408, 409; 412, 414) of generally parallel linear fibers, and said fibers forming one said layer extend at an angle of about 45 degrees relative to said side surfaces and cross said fibers forming the adjacent said layer, and said fibers in said adjacent layer extend at an angle of about 45 degrees relative to said side surface in the opposite direction.

5. A reinforced foam core panel as defined in any preceding claim, wherein said core panel is rectangular and has two pairs of opposite parallel edge surfaces, and said strips (254) of web material extend transversely at acute angles with respect to both pairs of said edge surfaces of said panel and intersect all of said edge surfaces.

6. A reinforced foam core panel as defined in any preceding claim, wherein said edge portions (374) of said strips (372) of web material protrude outwardly from said side surfaces of said boards (376) and flare outwardly against said side surfaces in response to attachment pressure of the skins (375).

7. A reinforced foam core panel as defined in any preceding claim, wherein said core panel includes intersecting strips of web material, all having said edge portions extending to said opposite side surfaces of said boards, and all of said strips of web material receive the resin to form a grid-like pattern of said tie webs.

8. A method of producing a reinforced foam core panel (35; 85; 110; 120; 145; 165; 175; 195; 215; 230; 250; 370; 380; 385; 395) having opposite side surfaces adapted to be attached to generally parallel skins (68; 375; 394) by adhesive resin, comprising the steps of forming a plurality of flat boards (40; 58; 114; 178, 182; 162, 164; 252; 376; 387; 406) of rigid plastics foam material with each board having at least one face with an overlying strip (62; 86; 112; 177; 198; 254; 372; 390; 408, 409; 412, 414, 416) of reinforcing web material (42), arranging the boards of foam material in a stack with the strips of web material disposed between the boards, connecting the boards of foam material and strips of web material together to form a core panel having opposite side surfaces with the strips of web material having edge portions extending to the opposite side surfaces, the side surfaces and the edge portions of the strips of web material being attachable by an adhesive resin to the skins, **characterised in that** the web material (42) is a porous and fibrous flexible web material, and the method includes connecting the boards of foam material and strips of web material together while maintaining substantial porosity throughout the strips of web material to permit the flow of resin through the strips between the boards to form tie webs for integrally interconnecting the skins.

9. A method as defined in claim 8, wherein the boards (406) of foam material are bonded between flexible and fibrous facer sheets (407), the method including disposing said strips of porous and fibrous web material (408, 409) between said facer sheets.

10. A method as defined in claim 8 or 9, including the step of forming fillet recesses (73; 386) within the side surfaces adjacent the edge portions of the strips of web material, and the recesses being intended to receive the resin (72) for increasing the bond of the strips to the skins (68; 394).

11. A method as defined in claim 8, 9 or 10, including the step of forming each strip of web material (42) with adjacent layers of generally parallel linear fibers (408, 409; 412, 414), and extending the fibers forming one layer at an angle of about 45 degrees relative to the side surfaces and cross the fibers forming the adjacent layers, and extending the fibers in the adjacent layers at an angle of about 45 degrees relative to side surfaces in the opposite direction.

12. A method as defined in any of claims 8 to 11, including the step of forming a rectangular core panel with two pairs of opposite parallel edge surfaces, and extending the strips (254) of web material transversely at acute angles with respect to both pairs of edge surfaces of the panel and intersecting all of the edge surfaces.

13. A method as defined in any of claims 8 to 12, including the steps of protruding the edge portions (374) of the strips (372) of web material outwardly from the side surfaces of the boards (376), and flaring the edge portions outwardly against the side surfaces in response to attaching the skins (375).

## Patentansprüche

1. Verstärkte(s) Schaumkernplatte/-paneel (35, 85, 110, 120, 145, 185, 175, 195, 215, 230, 250, 370, 380, 385, 395), die/das zur Verwendung zwischen allgemein parallelen Wänden/Beplankungen (68, 375, 394) angepasst wurde, bestehend aus einer Vielzahl von Platten/Paneelen (40, 58, 114, 178, 182, 162, 164, 252, 376, 387, 406) aus stabilem Kunststoffschaummaterial, wobei jede(s) Platte/Paneel entgegengesetzte Flächen, eine(n) Streifen (62, 86, 112, 177, 198, 254, 372, 390, 408, 409, 412, 414, 416) aus verstärktem Gewebematerial (42) aufweist, das zumindest eine der besagten Flächen einer(s) jeden besagten Platte/Paneels überlagert, wobei besagte Platten/Paneele aus Schaummaterial in einem Stapel mit besagten Streifen aus Gewebematerial angeordnet sind, das zwischen besagten Platten/Paneelen angeordnet ist, wobei besagte Platten/Paneele aus Schaummaterial und besagte Streifen aus Gewebematerial miteinander verbunden sind, um ein(e) Kemplatte/-paneel zu bilden, wobei besagte Platten/Paneele entgegengesetzte Seitenflächen ausweisen und besagte Streifen aus Gewebematerial Kantenteile aufweisen, die sich zu den besagten entgegengesetzten Seitenflächen erstrecken, wobei besagte Seitenflächen der besagten Platten/Paneele und besagte Kantenteile der besagten Streifen aus Gewebematerial durch ein Klebeharz mit den Wänden/Beplankungen verbunden werden können, **dadurch gekennzeichnet, dass** das Gewebematerial (42) ein poröses und faserförmiges, elastisches Gewebernaterial ist und dass besagte Platten/Paneele aus Schaummaterial und Streifen aus Gewebematerial miteinander verbunden werden, wobei die entscheidende Porosität bei besagten Streifen gänzlich beibehalten wird, damit Harz durch besagte Streifen zwischen die besagten Platten/Paneele aus Schaummaterial fließen kann, um Bandgewirke zur vollständigen Verbindung der Wände/Beplankungen miteinander zu bilden.

2. Verstärkte(s) Schaumkernplatte/-paneel, so wie in Anspruch 1 definiert, wobei jede(s) der besagten Platten/Paneele (406) aus Schaummaterial elastische und faserförmige Verkleidungsplatten (407) beinhaltet, die auf besagte entgegengesetzte Flächen aufgeklebt sind, und besagte Streifen aus porösem und faserförmigem Gewebematerial (408, 409) sind zwischen den besagten Verkleidungsplatten angeordnet.

3. Verstärkte(s) Schaumkemplatte/-paneel, so wie in Anspruch 1 oder 2 definiert, wobei besagte Platten/Paneele aus Schaummaterial (58, 387) Kehlausnehmungen (73, 386) innerhalb der besagten Flächen definieren, die an die Kantenteile (388) der besagten Streifen aus Gewebematerial (62, 390, 372) angrenzen, wobei besagte Ausnehmungen dazu vorgesehen sind, das Harz (72) aufzunehmen, um die Bindung der besagten Streifen mit den besagten Wänden/Beplankungen (68, 394) zu erhöhen.

4. Verstärkte(s) Schaumkemplatte/-paneel, so wie in Anspruch 1, 2 oder 3 definiert, wobei jeder besagter Streifen aus Gewebematerial (42) angrenzende Schichten (408, 409, 412, 414) aus allgemein parallelen linienförmigen Fasern beinhaltet, und besagte Fasern, die eine besagte Schicht bilden, erstrecken sich in einem Winkel von circa 45 Grad im Verhältnis zu den besagten Seitenflächen und kreuzen die besagten Fasern, die die besagte angrenzende Schicht bilden, und die besagten Fasern in der besagten angrenzenden Schicht erstrecken sich in einem Winkel von circa 45 Grad im Verhältnis zu der besagten Seitenfläche in entgegengesetzter Richtung.

5. Verstärkte(s) Schaumkemplatte/paneel, so wie in irgendeinem der vorangehenden Ansprüche definiert, wobei besagte(s) Kemplatte/-paneel rechtwinklig ist und zwei Paare entgegengesetzter, paralleler Kantenflächen ausweist und wobei sich die besagten Streifen (254) aus Gewebematerial im spitzen Winkel diagonal hinsichtlich beider Paare der besagten Kantenflächen der/des besagten Platte/Paneels erstrecken und alle der besagten Kantenflächen durchschneiden/-kreuzen.

6. Verstärkte(s) Schaumkemplatte/-paneel, so wie in irgendeinem der vorangehenden Ansprüche definiert, wobei die besagten Kantenteile (374) der besagten Streifen (372) des Gewebematerials von den besagten Seitenflächen der besagten Platten/Paneele (376) nach außen hervortreten und sich nach außen gegen die besagten Seitenflächen als Ansprechung auf den Befestigungsdruck der Wände/Beplankungen (375) erweitern.

7. Verstärkte(s) Schaumkemplatte/-paneel, so wie in irgendeinem der vorangehenden Ansprüche definiert, wobei besagte(s) Kernplatte/-paneel durchschneidende/-kreuzende Streifen aus Gewebematerial beinhaltet, die alle besagte Kantenteile aufweisen, die sich zu den besagten entgegengesetzten Seitenflächen der besagten Platten/Paneele erstrecken, und alle der besagten Streifen aus Gewebematerial nehmen das Harz auf, um ein gitterförmiges Muster der besagten Bandgewirke zu bilden.

8. Verfahren zur Herstellung einer(s) verstärkten Schaumkernplatte/-paneels (35, 85, 110, 120, 145, 165, 175, 195, 215, 230, 250, 370, 380, 385, 395), die/das entgegengesetzte Seitenflächen aufweist, die angepasst sind, um an allgemein parallelen Wänden/Beplankungen (68, 375, 394) mit Hilfe von Harz befestigt zu werden, beinhaltend die Schritte des Bildens einer Vielzahl an flachen Platten/Paneelen (40, 58, 114, 178, 182, 162, 164, 252, 376, 387, 406) aus stabilem Kunststoffschaummaterial, wobei jede(s) Platte/Paneel zumindest eine Fläche mit einem darüberlagernden Streifen (62, 86, 112, 177, 198, 254, 372, 390, 408, 409, 412, 414, 416) aus verstärktem Gewebematerial (42) aufweist, Anordnen der Platten/Paneele aus Schaummaterial in einem Stapel, wobei die Streifen aus Gewebematerial zwischen den Platten/Paneelen angeordnet sind und die Platten/Paneele aus Schaummaterial und die Streifen aus Gewebematerial miteinanander verbinden, um ein(e) Kemplatte/paneel mit entgegengesetzten Seitenflächen zu bilden, wobei die Streifen aus Gewebematerial Kantenteile aufweisen, die sich zu den entgegengesetzten Seitenflächen erstrecken, wobei die Seitenflächen und die Kantenteile der Streifen aus Gewebematerial mittels eines Klebeharzes zu den Wänden/Beplankungen hin verbindbar sind, **dadurch gekennzeichnet, dass** das Gewebematerial (42) aus einem porösen und faserförmigen, elastischen Gewebematerial besteht, und das Verfahren beinhaltet das Verbinden der Platten/Paneele aus Schaummaterial und der Streifen aus Gewebematerial miteinander, wobei die entscheidende Porosität der Streifen aus Gewebematerial gänzlich beibehalten wird, damit das Harz durch die Streifen zwischen den Platten/Paneelen fließen kann, um Bandgewirke zum vollständigen Verbinden mit den Wänden/Beplankungen untereinander zu bilden.

9. Verfahren, so wie in Anspruch 8 definiert, wobei die Platten/Paneele (406) aus Schaummaterial zwischen elastischen und faserförmigen Verkleidungsplatten (407) aufgeklebt/verlascht sind, wobei das Verfahren das Anordnen der besagten Streifen aus porösem und faserförmigem Gewebematerial (408, 409) zwischen den besagten Verkleidungsplatten beinhaltet.

10. Verfahren, so wie in Anspruch 8 oder 9 definiert, beinhaltend den Schritt des Bildens von Kehlausnehmungen (73, 386), wobei die Seitenflächen an die Kantenteile der Streifen aus Gewebematerial angrenzen, und die Ausnehmungen sind dazu vorgesehen, das Harz (72) aufzunehmen, um die Bindung der Streifen mit den Schichten (68, 394) zu erhöhen.

11. Verfahren, so wie in den Ansprüchen 8, 9 oder 10 definiert, beinhaltend den Schritt des Bildens eines jeden Streifens aus Gewebematerial (42) mit angrenzenden Schichten aus allgemein parallelen, linienförmigen Fasem (408, 409, 412, 414) und Erstrecken der Fasem, die im Verhältnis zu den Seitenflächen eine Schicht in einem Winkel von circa 45 Grad bilden, und Durchkreuzen der Fasem, die die angrenzenden Schichten bilden, und Erstrecken der Fasern in den angrenzenden Schichten in einem Winkel von circa 45 Grad im Verhältnis zu den Seitenflächen in entgegengesetzter Richtung.

12. Verfahren, so wie in irgendeinem der Ansprüche 8 bis 11 definiert, beinhaltend den Schritt des Bildens einer(s) rechtwinkligen Kemplatte/-paneels mit zwei Paaren von entgegengesetzten, parallelen Kantenflächen und Erstrecken der Streifen (254) des Gewebematerials diagonal im spitzen Winkel hinsichtlich beider Paare der Kantenflächen der Platte/des Paneels und Durchkreuzung aller Kantenflächen.

13. Verfahren, so wie in irgendeinem der Ansprüche 8 bis 12 definiert, beinhaltend die Schritte des Herausragens der Kantenteile (374) der Streifen (372) des Gewebematerials von den Seitenflächen der Platten/Paneele (376) nach außen und Erweiterung/Kelchung der Kantenteile gegen die Seltenflächen nach außen als Ansprechung auf die Befestigung der Schichten (375).

## Revendications

1. Panneau d'âme de mousse renforcée (35 ; 85; 110; 120; 145; 165; 175; 195; 215; 230; 250; 370; 380; 385; 395) adapté à être utilisé entre des peaux généralement parallèles (68; 375; 394), comprenant plusieurs plaques (40; 58 ; 114; 178, 182 ; 162, 164; 252; 376 ; 387; 406) de matériau de mousse plastique rigide avec chaque plaque ayant des faces opposées, une bande (62; 86; 112; 177 ; 198; 254; 372 ; 390 ; 408, 409 ; 412, 414, 416) de matériau de toile de renforcement (42) recouvrant au moins une desdites faces de chaque plaque, lesdites plaques de matériau de mousse étant arrangées en pile avec lesdites bandes de matériau de toile disposées entre lesdites plaques, lesdites plaques de matériau de mousse et lesdites bandes de matériau de toile étant connectées ensemble pour former un panneau d'âme avec lesdites plaques ayant des surfaces latérales opposées et avec lesdites bandes de matériau de toile ayant des parties de bords s'étendant vers lesdites surfaces latérales opposées, lesdites surfaces latérales desdites plaques et lesdites parties de bords desdites bandes de matériau de toile étant attachables avec une résine adhésive aux peaux, **caractérisé en ce que** le matériau de toile (42) est un matériau de toile flexible poreux et fibreux, et **en ce que** lesdites plaques de matériau de mousse et les bandes de matériau de toile sont connectées ensemble tout en maintenant une porosité substantielle à travers lesdites bandes pour permettre l'écoulement de résine à travers lesdites bandes entre lesdites plaques de matériau de mousse pour former des toiles de liaison pour relier les peaux de manière monobloc.

2. Panneau d'âme de mousse renforcée selon la revendication 1, dans lequel chacune desdites plaques (406) de matériau de mousse comprend des feuilles faciales fibreuses et flexibles (407) liées auxdites faces opposées, et lesdites bandes de matériau de toile poreux et fibreux (408, 409) sont disposées entre lesdites feuilles faciales.

3. Panneau d'âme de mousse renforcée selon la revendication 1 ou 2, dans lequel lesdites plaques de matériau de mousse (58; 387) définissent des évidements de raccord (73; 386) dans lesdites surfaces latérales adjacentes auxdites parties de bords (388) desdites bandes de matériau de toile (62; 390, 372), lesdits évidements étant prévus pour recevoir de la résine (72) pour augmenter la liaison desdites bandes auxdites peaux (68 ; 394).

4. Panneau d'âme de mousse renforcée selon la revendication 1, 2 ou 3, dans lequel chacune desdites bandes de matériau de toile (42) comprend des couches adjacentes (408, 409; 412, 414) de fibres linéaires généralement parallèles, et lesdites fibres formant une desdites couches s'éteadent avec un angle d'environ 45° par rapport auxdites surfaces latérales et croisent lesdites fibres formant la couche adjacente, et lesdites fibres dans ladite couche adjacente s'étendent avec un angle d'environ 45° par rapport à ladite surface latérale dans la direction opposée.

5. Panneau d'âme de mousse renforcée selon l'une quelconque des revendications précédentes, dans lequel ledit panneau d'âme est rectangulaire et comprend deux paires de surfaces de bords parallèles opposés, et lesdites bandes (254) de matériau de toile s'étendent transversalement avec des angles aigus par rapport aux deux paires de surfaces de bords, dudit panneau et coupent toutes les surfaces de bords.

6. Panneau d'âme de mousse renforcée selon l'une quelconque des revendications précédentes, dans lequel lesdites parties de bords (374) desdites bandes (372) de matériau de toile font saillie vers l'extérieur à partir desdites surfaces latérales desdites plaques (376) et sont alignées vers l'extérieur contre lesdites surfaces latérales en réponse à une pression de fixation des peaux (375).

7. Panneau d'âme de mousse renforcée selon l'une quelconque des revendications précédentes, dans lequel ledit panneau d'âme comprend des bandes de matériau de toile qui s'entrecoupent, toutes ces bandes ayant lesdites parties de bords s'étendant vers lesdites surfaces latérales opposées desdites plaques, et toutes les bandes de matériau de toile reçoivent de la résine pour former un motif semblable à une grille formée à partir desdites toiles de liaison.

8. Procédé pour produire un panneau d'âme de mousse renforcée (35 ; 85 ; 110 ; 120 ; 145 ; 165 ; 175 ; 195 ; 215 ; 230 ; 250 ; 370 ; 380 ; 385 ; 395) ayant des surfaces latérales opposées adaptées à être fixées à des peaux généralement parallèles (68 ; 375 ; 394) par une résine adhésive, comprenant les étapes de former plusieurs plaques plates (40; 58 ; 114; 178, 182; 162, 164 ; 252; 376 ; 387; 406) de matériau de mousse plastique rigide avec chaque plaque ayant au moins une face avec une bande recouvrante (62; 86; 112; 177; 198; 254; 372; 390; 408, 409; 412, 414, 416) de matériau de toile de renforcement (42), de disposer les plaques de matériau de mousse en pile avec les bandes de matériau de toile disposées entre les plaques, connecter les plaques de matériau de mousse et les bandes de matériau de toile ensemble pour former un panneau d'âme ayant des surfaces latérales opposées avec les bandes de matériau de toile ayant des parties de bords s'étendant vers les surfaces latérales opposées, les surfaces latérales et les parties de bords des bandes de matériau de toile pouvant être fixées avec une résine adhésive aux peaux, **caractérisé en ce que** le matériau de toile (42) est un matériau de toile flexible poreux et fibreux, et le procédé comprend de connecter les plaques de matériau de mousse et les bandes de matériau de toile ensemble tout en maintenant une porosité substantielle à travers les bandes de matériau de toile pour permettre l'écoulement de résine à travers les bandes entre les plaques pour former des toiles de liaison pour relier les peaux de manière monobloc.

9. Procédé selon la revendication 8, dans lequel les plaques (406) de matériau de mousse sont liées entre des feuilles faciales flexibles et fibreuses (407), le procédé comprenant de disposer lesdites bandes de matériau de toile poreux et fibreux (408, 409) entre lesdites feuilles faciales.

10. Procédé selon la revendication 8 ou 9, comprenant les étapes de former des évidement de raccord (73; 386) dans les surfaces latérales adjacentes aux parties de bords des bandes de matériau de toile, et les évidements étant destinés à recevoir de la résine (72) pour augmenter la liaison des bandes aux peaux (68 ; 394).

11. Procédé selon la revendication 8, 9 ou 10, comprenant les étapes de former chaque bande de matériau de toile (42) avec des couches adjacentes de fibres linéaires généralement parallèles (408, 409 ; 412, 414), et d'étendre les fibres formant une couche avec un angle d'environ 45° par rapport aux surfaces latérales et de croiser les fibres formant les couches adjacentes, et d'étendre les fibres dans les couches adjacentes avec un angle d'environ 45° par rapport aux surfaces latérales dans la direction opposée.

12. Procédé selon l'une quelconque des revendications 8 à 11, comprenant l'étape de former un panneau d'âme rectangulaire avec deux paires de surfaces de bords parallèles opposés, et d'étendre les bandes (254) de matériau de toile transversalement avec des angles aigus par rapport aux deux paires de surfaces de bords du panneau et de croiser toutes les surfaces de bords.

13. Procédé selon l'une quelconque des revendications 8 à 12, comprenant les étapes de disposer les parties de bords (374) des bandes (372) du matériau de toile en saillie vers l'extérieur à partir des surfaces latérales des plaques (376), et d'aligner les parties de bords vers l'extérieur contre les surfaces latérales en réponse à une fixation des peaux (375).
